# EUROPEAN PATENT APPLICATION

(11) **EP 3 195 732 A1**
(43) Date of publication of application: **26.07.2017**
(21) Application number: 17152304.6
(22) Date of filing: 19.01.2017
(51) Int. Cl.: A23G 9/08, A47F 3/04, A23G 9/22

(54) **MACHINE FOR BATCH FREEZING AND DISPLAYING OF FRESH ICE CREAMS, SORBETS, SLUSHES AND SIMILAR PRODUCTS**

(30) Priority: 20.01.2016 IT UB20160124
(71) Applicant: Soffientini, Paolo, 26848 San Fionano (IT); Cipelletti, Emanuela, 26848 San Fiorano (IT)
(72) Inventor: Soffientini, Paolo, 26848 San Fionano (IT); Cipelletti, Emanuela, 26848 San Fiorano (IT)
(74) Representative: Siniscalco, Fabio

(57) **Abstract**

A machine (10) for batch freezing and displaying of fresh ice creams, sorbets, slushes and similar products provides a bench (11) with a shelf (12) in which at least one batch freezing receptacle is fitted that is closed by a lid (15) and in which a stirrer is operating. In order to avoid the fogging of the lids (15) the machine comprises one or more air flow generators (22) and one or more conveyors (23) connected to the generators (22) for conveying the air flow to the lids (15).

## Description

### BACKGROUND OF THE INVENTION

The subject of the present invention is a machine for batch freezing and displaying of fresh ice-creams, sorbets, slushes and similar products.

### STATE OF THE ART

The batch freezer is a machine that allows the transformation of a liquid mixture into ice-cream by means of the continuous stirring, the action of cold temperature, and the air inclusion.

The batch freezer comprises one or more batch freezing receptacles, arranged horizontally or vertically, suitable for receiving the liquid mixture. Such batch freezing receptacles are duly cooled and inside each one of them a stirrer rotates continuously.

There are on the market displaying batch freezers that produce and serve a creamy ice-cream right in front of the customer. This represents something new with respect to the traditional refrigerating showcase equipped with bowls displaying the various ice-cream flavours prepared aside in separate batch freezers.

Substantially the displaying batch freezer comprises a bench with an upper shelf in which one or more vertical batch freezing receptacles with stirrers are assembled. The motors activating the stirrers and the cooling system are arranged within the bench, as well as all the various electric and electronic components. Command panels are provided outside the bench. The bench can be equipped with an awning, storage shelves, protection glass, or other accessories according to the use and the needs.

Each batch freezer receptacle is covered by a transparent lid, being normally made of plastic and with curved shape, protecting the product both while being processed and once prepared and also allowing the customer to view the ice-cream batch freezing process and the end product.

Under certain temperature and humidity conditions of the environment where the displaying batch freezer operates it may happen that the transparent lid fogs up.

It must in fact be considered that, inside the batch freezer receptacle, the ice-cream is at a temperature of around -10°C and the air within the lid ranges from +5°C and -5°C. In some places during the summer season, the environment in which the machine operates can have rather high temperature and humidity levels, for example a temperature higher than 30°C and a relative humidity rate higher than 70%. In these conditions the humid air, getting in contact with the cold lid, condenses into water vapour generating the fogging of the lid.

Of course this leads to the undesired consequence of preventing the customer from viewing the ice-cream batch freezing process or the end product, and the function of displaying, that is a peculiarity of this kind of machine, fails to be so.

In the usual showcases of ice-cream by the scoop that use glass walls, in order to overcome the above said inconvenience, electrical resistances that warm up the glass and prevent the condensation phenomenon are used.

In the displaying batch freezers lids are made of plastic and it is not possible to apply electrical resistances that would deform the plastic.

On the other hand implementing curved glass lids is not acceptable due to the cost, the weight and the fragility of this material.

### OBJECT OF THE INVENTION

The scope of the invention is to propose a machine for batch freezing and displaying of fresh ice-creams and other products, being able to solve the above mentioned problem of fogging of the lids.

### BRIEF DESCRIPTION OF THE INVENTION

Such object is achieved by a machine according to claim 1.

### BRIEF DESCRIPTION OF THE DRAWINGS

In order to better understand the invention here follows a description of an exemplary, but not exclusive, embodiment illustrated in the enclosed drawings wherein:
Figure 1 is a front perspective view from above of a machine for the batch freezing and displaying of fresh ice-creams and other products according to the invention;
Figure 2 is a front perspective view from below according to a partial cross section of the machine of fig.1;
Figure 3 is a side view of the machine of fig. 1;
Figure 4 is a front perspective view from above of another machine for the batch freezing and displaying of fresh ice-creams and other products according to the invention;
Figure 5 is a rear perspective view from below according to a partial cross-section of machine of fig. 4;
Figure 6 is a rear view of machine of fig. 1;
Figure 7 shows from the side according to a partial cross-section a variation applicable to both machines of fig.1 and fig.4;
Figure 8 shows from the side a further variation applicable to both machines of fig.1 and fig.4;
Figure 9 is a front perspective view from above of a further machine for the batch freezing and displaying of fresh ice-creams and other products according to the invention;
Figure 10 is a side view of the machine of fig. 9.

### DETAILED DESCRIPTION OF THE INVENTION

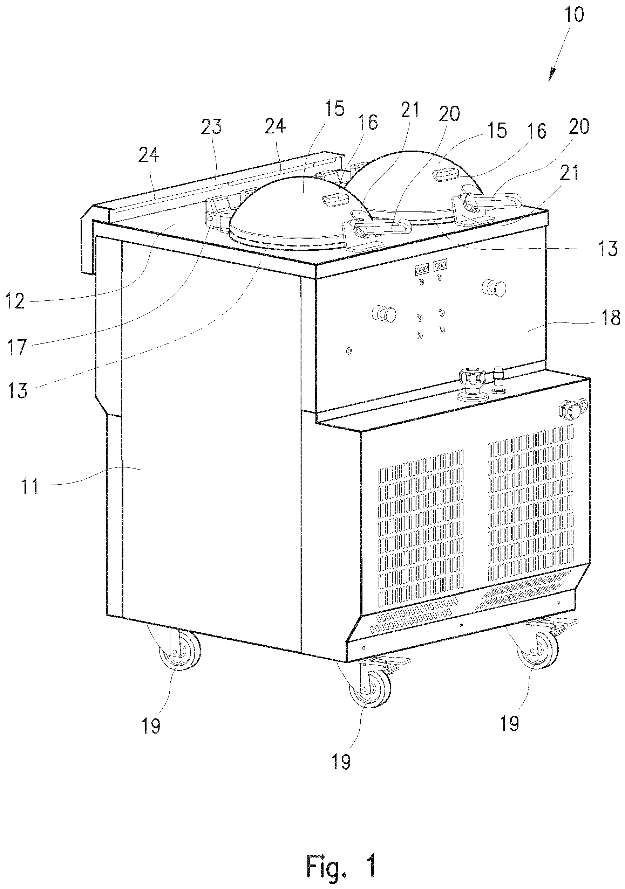

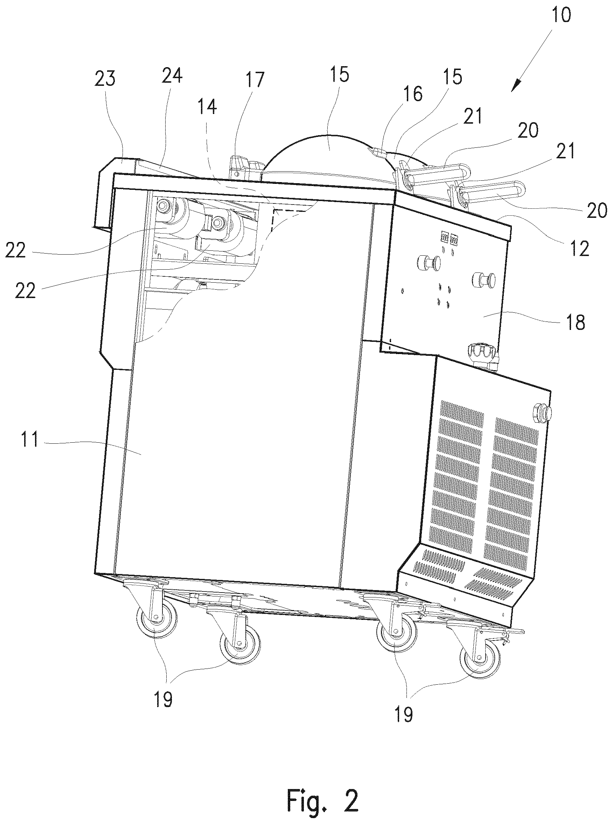

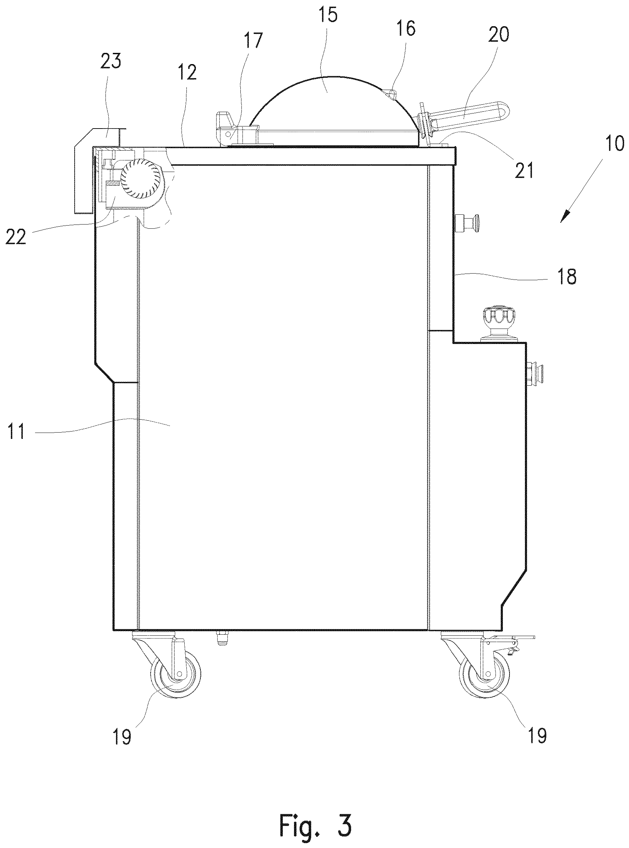

The machine for batch freezing and displaying of fresh ice-creams and other products of figures 1-3, generally indicated by 10, comprises a bench 11 presenting a shelf 12.

In the shelf 12 two batch freezing receptacles 13 are fitted.

In each batch freezing receptacle 13 a stirrer is operating, not visible in the figures, whose rotation movement is driven by a corresponding electric motor 14 arranged inside bench 11.

Each batch freezing receptacle 13 is closed by a transparent lid 15 made of plastic and dome-shaped. Each lid 15 is equipped with a handle 16 and is hinged to a hinge 17, so as to rotate between a closing position and an opening position of the corresponding batch freezing receptacle 13.

Inside the bench 11 beyond the motors driving the stirrers, a cooling circuit and various electrical and electronic components are arranged.

On the side opposite to the hinge 17 of each lid 16 a magnetic micro-switch is envisaged, not illustrated, that provides to disable the electric motor of the stirrer in the batch freezing receptacle 13 associated to lid 15, when the lid 15 is opened, in order to prevent the access to the stirrer while rotating and avoid damages.

On the front wall of the bench 11 a control panel 18 is provided with controls dedicated to each batch freezing receptacle 13, permitting to regulate the temperature inside the batch freezing receptacle 13 and to activate or stop the stirrer.

The machine 10 is equipped in the lower part with a series of wheels 19 that can be blocked, allowing to position and easily move the machine itself.

The fluid mixture for the preparation of the ice-cream is poured inside each batch freezing receptacle 13, the cooling circuit and the stirrer are therefore activated so as to obtain the ice-cream through the combined action of the stirring of the mixture, its cooling and the air inclusion.

Each lid 15 being transparent allows to view from outside both the ice-cream while being processed as well as the prepared ice-cream.

In order to pick up the ice-cream processed in the batch freezing receptacles 13 a scoop 20 is provided for each receptacle. Scoop 20 is fitted on a support 21. The scoop 20 is formed by a handle that extends towards the external part of the corresponding batch freezing receptacle 13 and by a part for picking that extends within the batch freezing receptacle through a cut in the lid 15, remaining above the receptacle edge.

Inside the bench 11, in the upper and rear part, two tangential fans 22 are fitted, arranged near the stirrers electric motors 14. Fans 22 outlets are placed near inlet openings of an angular box conveyor 23, which is fitted outside on the bench 11 and extends along a rear edge of the shelf 12. The conveyor 23 has two aligned outlet slits 24, each of them arranged next to the respective lid 15.

By activating fans 22 air flows are generated and conveyed by the rear conveyor 23 towards the lids 15 through the outlet slits 24.

These air flows avoid the fogging of the lids 15 at certain temperature and humidity external conditions, as described in the introduction. In fact these air flows on the lids 15 avoid the stagnation of air on such lids, that are cold due to the presence of the ice-cream in the receptacles 13, thus preventing the condensation of humid air on the lids.

The electric motors 14 of the stirrers, being close to the fans 22, heat the air near the fans so that the air flows are warm thus making the antifogging action more effective.

The power of the fans 22 and the height of the outlet slits 24 will be properly calculated in order for the air flow to exert an effective antifogging action without modifying the environment around the machine, in other words the air flow must not be perceived by operators or customers standing next to the machine.

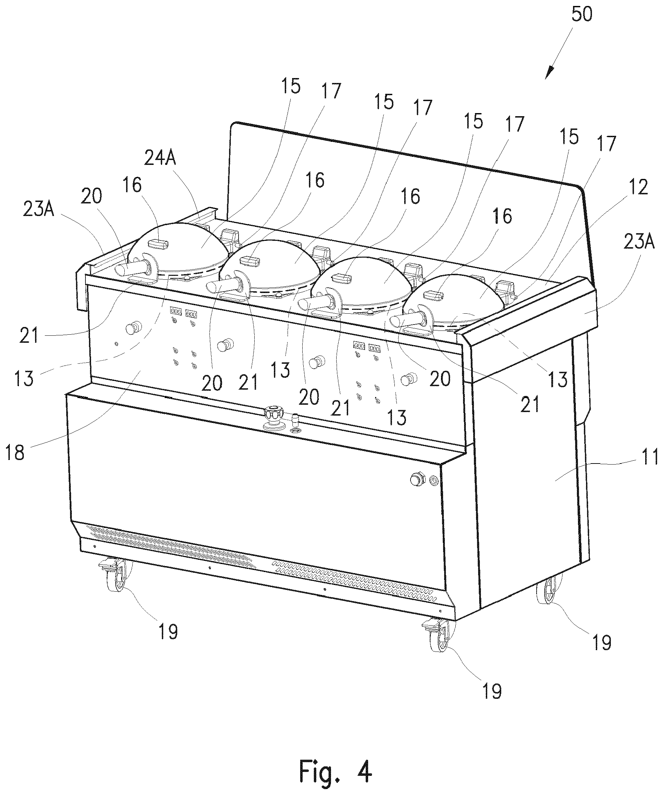

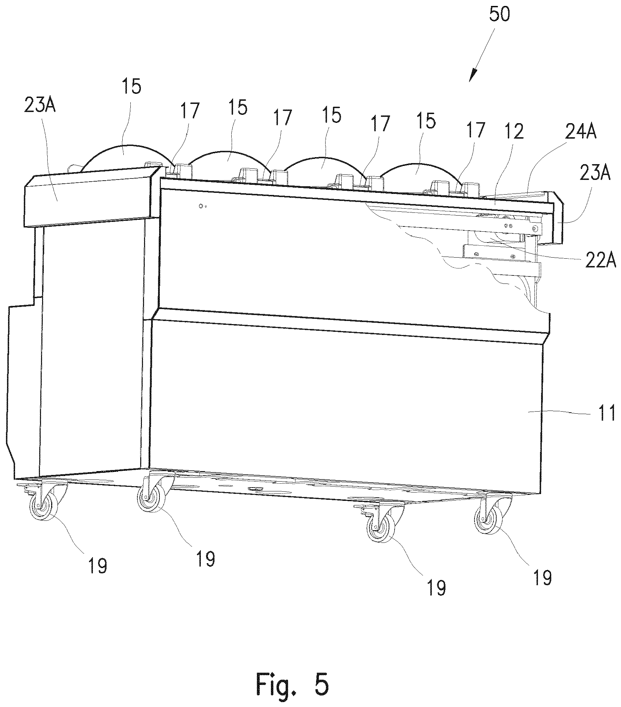

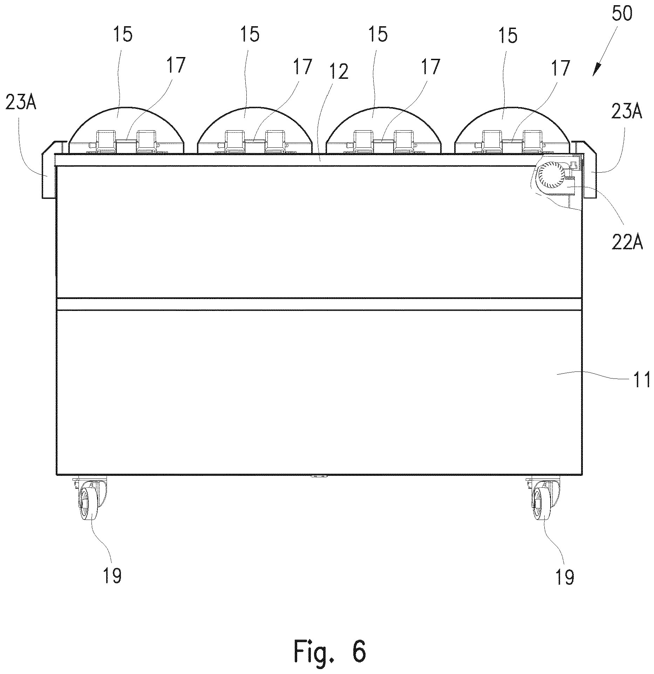

Figures 4-6 show a machine for the batch freezing and displaying of fresh ice-creams, generally indicated by 50, at all similar to machine 10, presenting, rather than two, four batch freezing receptacles arranged in aligned position.

The known components previously considered for machine 10 are indicated by the same reference numbers.

In this case, inside the bench 11, in the upper part, two tangential fans 22A are fitted, arranged on the opposite sides of the bench 11 near the two outer batch freezing receptacles 13; the two fans 22A are positioned near the electric motors of the stirrers of the two outer batch freezing receptacles. The outlets of the two fans 22A are positioned near the inlet openings of two angular box conveyors 23A, being installed externally on the bench 11 at the said opposite sides of the same and extend along the side edges of shelf 12. Each conveyor 23A has an outlet slit 24A near the lid 15 of a corresponding outer batch freezing receptacle 13.

In this case also the lids 15 of the batch freezing receptacles 13 receive a flow of warm air from the two lateral conveyors 23A having antifogging function. Here the same considerations as for machine 10 can be applied.

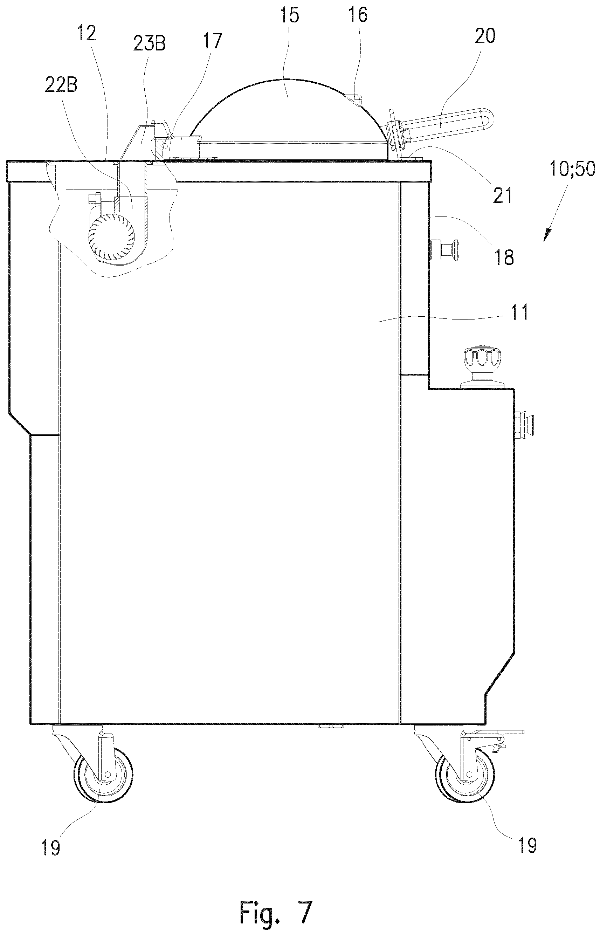

Figure 7 shows a variation that can be applied both to machine 10 and to machine 50. In this case for each lid 15 a tangential fan 23B is provided inside the bench 11 and a respective angular conveyor 24B on the outside of the bench 11 directed towards the lid 15. Each tangential fan 23B is positioned near the electric motor of the stirrer of the batch freezing receptacle closed by the respective lid 15. In this case there is a specific flow of warm air dedicated to the single lid 15.

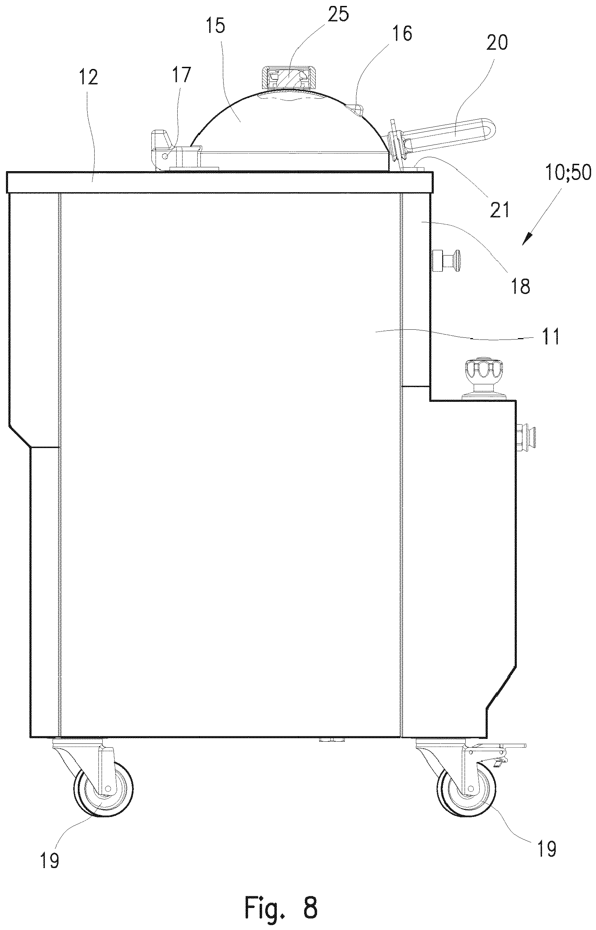

Figure 8 shows another variation that can be applied also in this case both to machine 10 and to machine 50. The variation of figure 8 provides the fitting on top of each lid 15 of a radial fan 25 with a diffuser directing a bell-shaped flow of air from the top of the lid 15 to the base of the same lid, with an antifogging function. The electric wires carrying energy to the fan can be inserted in the lid 15. The diffuser has the same function as the conveyors previously described.

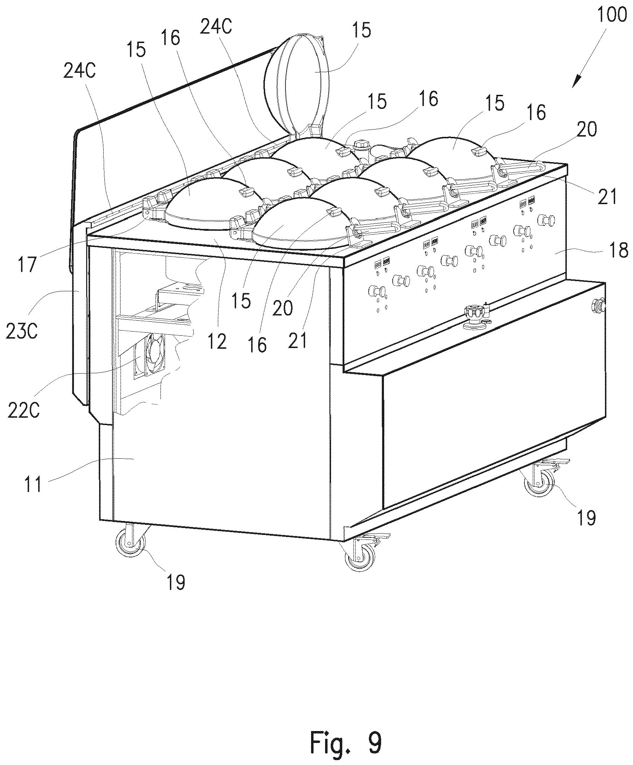

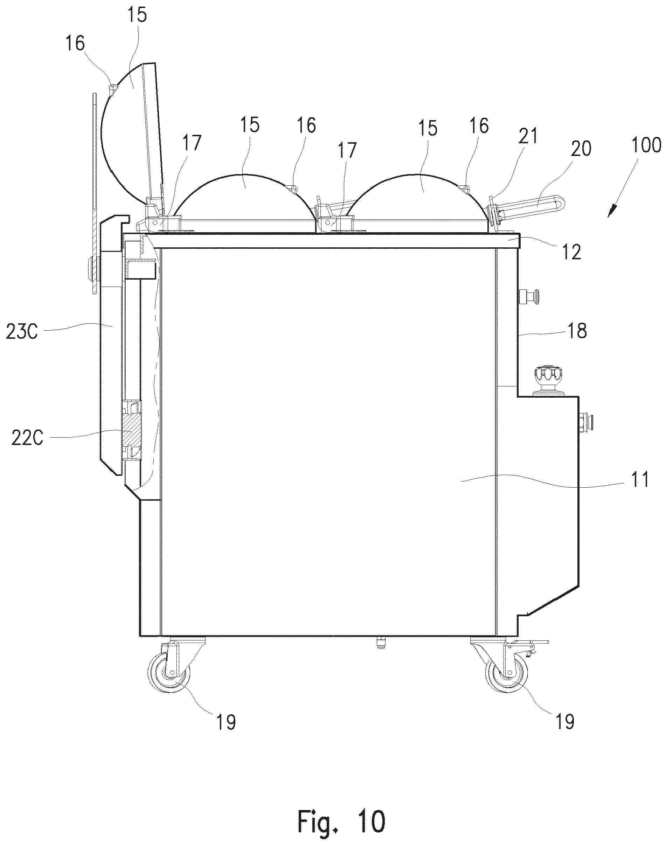

Figures 9,10 show a machine for the batch freezing and displaying of fresh ice-creams, generally indicated by 100, at all similar to machines 10 and 50, presenting eight batch freezing receptacles arranged in aligned position in two rows.

The known components previously considered for machine 10 and 50 are indicated by the same reference numbers.

In this case radial fans 22C and a rear conveyors 23C with a plurality of aligned slits 24C are used. For example four radial fans 22C can be used sending air flow to four respective slits 24C near the corresponding front/back couples of lids 15.

The variations of figures 7,8 can also be applied to machine 100.

The fans 22;22A;22B;22C;25 are operated in an independent manner with respect to the operation of the stirrer and with respect to the operation of the cooling circuit.

Each fan can be operated in an independent manner with respect to the other fans.

The fans are operated through controls on the control panel 18.

The switching on and off of the fans can be timed through controls on the control panel 18 according to a specific timing in order to obtain an effective antifogging action and a low energy consumption.

It is intended that further variations and/or additions can be considered with respect to what herein described and illustrated.

The antifogging systems above described can be applied to any machine for the batch freezing and displaying of fresh ice-creams, sorbets, slushes and similar products, having any number of batch freezing receptacle.

Even the arrangement of batch freezing receptacles can be of any type.

The fans used in the machines 10,50 can be radial fans as in machine 100. Radial or tangential fans or in general every kind of flow generating means can be used.

The configuration of the conveyors can vary, though what above described and illustrated proves to be particularly effective.

Each conveyors can be equipped with one or more slits for directing the air flow.

The warm air can be drawn from any inner source of warm air, for example from the pressure charger of the cooling circuit.

It is also possible to draw the air from outside even though the warm air coming from inside the machine is particularly effective.

## Claims

1. Machine (10;50;100) for batch freezing and displaying fresh ice-creams, sorbets, slushes and similar products, comprising a bench (11) with a shelf (12) in which at least one batch freezing receptacle (13) is fitted that is closed by a lid (15) and wherein a stirrer is operating, **characterised in that** it comprises air flow generating means (22;22A;22B;22C;25) and conveying means (23;23A;23B;23C) connected to said generating means to convey the air flow to the lids (15) with antifogging function.

2. Machine according to claim 1, wherein the air flow generating means (22;22A;22B;22C) are arranged inside the bench (11) and the conveying means (23;23A;23B;23C) are arranged outside the bench (11).

3. Machine according to claim 1 or 2, wherein the conveying means (23; 23C) are arranged along a rear edge of the bench (11).

4. Machine according to claim 1 or 2, wherein the conveying means (23A) are arranged along opposite lateral edges of the bench (11).

5. Machine according to claim 1 or 2, wherein the conveying means (23B) are arranged near the lids (15).

6. Machine according to claim 1, wherein the flow generating means comprise one or more fans (22; 22A; 22B;22C).

7. Machine according to claim 1, wherein the conveying means comprise one or more angular box conveyors (23;23A;23B;23C).

8. Machine according to claim 7, wherein each conveyor (23;23A;23B;23C) comprises one or more outlet slits (24;24A;24C) that direct the air flow to one or more lids (15).

9. Machine according to claim 1, wherein the conveying means comprise for each lid (15) a conveyor (23B) that directs the air flow exclusively to the respective lid (15).

10. Machine according to claim 1 or 9, wherein the air flow generating means comprise for each lid (15) a fan (25) fitted on the lid (15), which incorporates a diffuser that conveys the air flow over the lid (15).

11. Machine according to claim 1, wherein the air flow generating means (22;22A;22B;22C) are arranged near sources of heat (14) of the machine.

12. Machine according to claim 11, wherein the sources of heat consist of electric motors (14) driving the stirrers.
